# EUROPEAN PATENT APPLICATION

(11) **EP 3 355 396 A1**
(43) Date of publication of application: **01.08.2018**
(21) Application number: 16849053.0
(22) Date of filing: 26.09.2016
(51) Int. Cl.: H01M 4/86, H01M 4/88, H01M 8/18

(54) **SLURRY COMPOSITION FOR MANUFACTURING REDOX FLOW BATTERY ELECTRODE, AND REDOX FLOW BATTERY ELECTRODE COMPRISING SAME**

(30) Priority: 25.09.2015 KR 20150136917
(71) Applicant: Lotte Chemical Corporation, Seoul, 05551 (KR)
(72) Inventor: BAEK, Youngmin, Daejeon 35245 (KR); PARK, Sang Sun, Seoul 04395 (KR); HONG, Moon Hyun, Gwacheon-si Gyeonggi-do 13833 (KR); PARK, Hui Man, Daejeon 34074 (KR); JANG, Wooin, Daejeon 35355 (KR)
(74) Representative: Agasse, Stéphane
(86) International application number: PCT/KR2016/010761
(87) International publication number: WO 2017/052328

(57) **Abstract**

The present invention relates to a slurry composition for manufacturing an electrode for a redox flow battery and an electrode for a redox flow battery comprising the same. The slurry composition according to the present invention is characterized by being excellent in adhesion to a nonpolar substrate, excellent in conductivity, and capable of improving the durability of the redox flow battery.

## Description

### [TECHNICAL FIELD]

### CROSS-REFERENCE TO RELATED APPLICATION(S)

The present invention claims priority to and the benefits of Korean Patent Application No. 10-2015-0136917, filed with the Korean Intellectual Property Office on September 25, 2015, the disclosure of which is incorporated herein by reference in its entirety.

The present invention relates to a slurry composition for manufacturing an electrode for a redox flow battery and an electrode for a redox flow battery comprising the same.

### [BACKGROUND ART]

Existing power generation systems, such as with thermal power generation emitting a large amount of greenhouse gases and environmental pollutions by using fossil fuels, and with nuclear power plants entailing their stability issue and hazardous waste processing, have come to various destined breaking points. In response thereto, research efforts have increased significantly to develop environmentally friendlier, higher efficiency energy sources and a power supply system using the same.

In particular, power storage technology has been the focus of research and development activities for broadening the usability of renewable energy sources against their significant susceptibility to external conditions and for enhancing the efficiency of power utilization, wherein secondary batteries receive more intensive interest and their research and development efforts are actively made.

Redox flow battery represents one class of secondary batteries, and it refers to an oxidation/reduction battery capable of converting chemical energy of an active substance directly into electrical energy. The redox flow battery has electrolytes containing an active material that causes an oxidation/reduction reaction, and circulating between opposite electrodes and the storage tank, to proceed charging and discharging. Such a redox flow battery typically includes a tank for storing active materials in different oxidized states, a pump for circulating the active materials during charge/discharge, and a unit cell partitioned by a separation membrane, wherein the unit cell includes an electrode, an electrolyte, and a separation membrane.

Unlike conventional secondary batteries, the redox flow battery has a system in which the active materials in the electrolytic solutions are oxidized/reduced to perform the charge/discharge, so that the battery output and the electrolytic solution tank can be separated from each other. Thus, there is an advantage that the output and capacity can be freely designed. In addition, since the electrode operates at room temperature using an inactive electrode, there is also an advantage that the electrode has high durability.

The performance of the redox flow battery is mainly affected by the type of active materials in the electrolytes, the type of the separation membrane and the type of the electrode. Combination of the active materials that causes an oxidation/reduction reaction is generally referred as a redox couple, and Fe/Cr, V/V, V/Br, Zn/Br, Zn/Ce, and the like are known until now. In addition, the separation membrane is required to have high ion selective permeability, low electric resistance, chemical stability and mechanical strength.

On the other hand, the electrode for the redox flow battery is an inactive electrode, and the electrode itself does not cause a chemical reaction, and serves to provide a path of electron transfer during an oxidation/reduction reaction. Generally, the electrode is manufactured by a method in which a carbon compound having a large reaction area is coated onto a conductive plastic sheet in order to maximize the oxidation-reduction reaction.

However, in the method of coating an adhesive binder on a predetermined sheet and coating a carbon compound powder, the carbon compound powder may not be uniformly coated in some cases. Performing the thermo-compression bonding process to fix the carbon compound powder may lead to a decrease in the productivity of the final product, and there is a limitation in that the thermo-compression bonded carbon compound powder may be peeled off at a later time and thus the performance of the battery can be deteriorated.

In addition, since the sheet used for formation of the electrode is non-polar in most cases, the adhesion between the non-polar base material and the carbon compound powder may be decreased and so it is detached, which may cause a decrease in the durability of the redox flow battery.

Therefore, there is a need to develop a slurry composition capable of preparing an electrode having a high conductivity while having excellent adhesion with a non-polar base material.

### [DETAILED DESCRIPTION OF THE INVENTION]

### [Technical Problem]

It is an object of the present invention to provide a slurry composition for manufacturing an electrode for a redox flow battery.

It is another object of the present invention to provide an electrode for a redox flow battery manufactured by using the slurry composition.

### [Technical Solution]

In order to achieve the above objects, the present invention provides a slurry composition for manufacturing an electrode for a redox flow battery comprising a solid comprising an activated carbon, a conductive carbon, and a polypropylene-graft-maleic anhydride; and a hydrophobic solvent.

The term "redox flow battery" as used herein refers to an oxidation/reduction battery capable of converting chemical energy of an active substance directly into electrical energy. A combination of active materials that cause an oxidation/reduction reaction is generally referred as a redox couple. In present invention, the redox flow battery such as Fe/Cr, V/V, V/Br, Zn/Br, Zn/Ce, and the like can be used.

The slurry composition according to the present invention is for manufacturing the electrode for the redox flow battery and includes an activated carbon and conductive carbon as the main component of the electrode.

The activated carbon used in the present invention is generally a carbon compound having pores with a size of 1 nm to 2 nm. The activated carbon has a large area capable of reacting the electrode and the electrolytes due to the internal pores, thereby increasing the oxidation-reduction rate.

Preferably, the activated carbon has a specific surface area of 700 to 2200 m²/g and an average particle diameter of 2 to 80 um. When the specific surface area is less than 700 m²/g, there is a disadvantage that the reaction area becomes small and thus the efficiency is low when applied to the redox flow battery. Further, when the average particle diameter is 80 um or more, there is a disadvantage that, when the slurry is stored after the preparation, the layer separation occurs fast. More preferably, the activated carbon has a specific surface area of 800 to 1600 m²/g.

The conductive carbon used in the present invention is a major component of the electrode manufactured with the slurry composition according to the present invention along with the activated carbon.

As the conductive carbon, at least one selected from the group consisting of carbon blacks, graphite, carbon fibers and carbon nanotubes can be used. Preferably, the conductive carbon includes all of the carbon blacks, graphite, carbon fibers, and carbon nanotubes. More preferably, the conductive carbon includes 6 to 10 parts by weight of carbon blacks, 4 to 10 parts by weight of graphite, 4 to 6 parts by weight of carbon fibers and 1 to 5 parts by weight of carbon nanotubes. Examples of commercially available products include SuperP, and SuperC from TimCal Ltd., and 300J, and 600J from Ketjen Co., Ltd., and the like.

The polypropylene-graft-maleic anhydride used in the present invention acts as a binder of the slurry composition according to the present invention and serves to bind the activated carbon and the conductive carbon.

The polypropylene-graft-maleic anhydride has a structure in which maleic anhydride is grafted in a chain of polypropylene, and the grafted maleic anhydride makes it possible to further improve the adhesion to the sheet when the slurry composition is formed on the sheet. The polypropylene-graft-maleic anhydride may have a weight average molecular weight of 3000 to 30000, but is not limited thereto.

In order to distinguish it from the hydrophobic solvent in the slurry composition according to the present invention, the activated carbon, conductive carbon and polypropylene-graft-maleic anhydride are collectively referred to as a 'solid'. The slurry composition according to the present invention preferably contains 75 to 90 parts by weight of activated carbon, 5 to 15 parts by weight of conductive carbon and 4 to 10 parts by weight of polypropylene-graft-maleic anhydride, based on 100 parts by weight of the solid.

The present invention also includes a hydrophobic organic solvent in addition to the solid. The hydrophobic organic solvent can more easily dissolve the activated carbon and the conductive carbon having the hydrophobic characteristics, and thus enable them to be uniformly mixed and dispersed to become the slurry state.

Specific examples of the hydrophobic organic solvent include toluene, cyclohexane, xylene, N-methylpyrrolidone, dimethyl sulfoxide, dimethyl acetate, or a mixture of two or more thereof.

The slurry composition according to the present invention preferably contains the solid in an amount of 36 to 45 parts by weight and the hydrophobic solvent in an amount of 55 to 64 parts by weight.

Also preferably, the slurry composition according to the present invention has a viscosity of 1500 to 3500 cps.

The slurry composition for manufacturing the electrode for the redox flow battery may be manufactured by forming the above components into a slurry phase by a mixing method commonly used in the art. Examples of the mixing method include a high-speed stirring method using a homogenizer or a stirrer, or a method using apparatuses such as a dissolver using a screw, a three-roll mill for passing the gap of the roll, a ball mill using a collision of the balls, and an agitator mill or an ultrasonic mixer using a collision between particles. In addition, the order of the mixing of the above respective components is not particularly limited, and the slurry composition can be prepared by adding or mixing the respective components in various order.

Preferably, the slurry composition can be prepared by the method including the steps of mixing the activated carbon and the conductive carbon; adding polypropylene-graft-maleic anhydride and a hydrophobic solvent; and adding a hydrophobic solvent.

Further, the present invention provides a method for manufacturing an electrode for a redox flow battery including a step of coating the slurry composition for manufacturing the electrode for the redox flow battery onto a substrate.

As described above, the slurry composition having the specific composition can be coated onto a predetermined substrate to manufacture the electrode for the redox flow battery. Not only such electrode can provide a uniform thickness and a wide reaction site in the entire region but also the respective final product can have uniform performance even when applied to a mass preparation process. Further, the lifetime of the battery can be increased by minimizing the phenomenon of being peeled off from the substrate even during long-term driving.

The slurry composition for manufacturing the electrode for the redox flow battery may be coated onto the substrate in a thickness of 5 um to 200 um. The substrate is a support for the slurry composition to be coated and can be removed when a solid state electrode is formed through a drying process or the like. Specific examples of such substrate are not limited, but various conductive plastic sheets, organic substrates (e.g., polymer substrates, etc.), inorganic substrates (e.g., metal substrates, etc.), glass substrates, and organic compound substrates such as fibers and woods can be used.

The coating of the slurry composition can be carried out by using various coating or applying methods commonly known in the art, and for example, slot-die coater, comma coater, blade coater, gravure coater, bar coater, or lip coater can be used.

Meanwhile, the method for manufacturing the electrode for the redox flow battery may further include a step of drying the coated slurry composition. The method, apparatus or temperature conditions that can be used in such drying step are not particularly limited, and a method of heating with a predetermined heat source, a method of ventilation, a method of drying at room temperature or low temperature, and the like can be used variously.

In addition, to ensure more uniform coating and uniformity of the slurry composition, the method for manufacturing the electrode for a redox flow battery may further include a step of deaerating the slurry composition.

Further, the present invention provides a redox flow battery including the electrode manufactured using the slurry composition for manufacturing the electrode for the redox flow battery.

The redox flow battery may have the configuration of a redox flow battery commonly used in the art, with the exception that the electrode according to the present invention is used. As one example, the redox flow battery may include a tank containing active materials in different oxidized states; a pump for circulating the active materials during charge/discharge; electrodes, electrolytes and unit cells partitioned by a separation membrane, wherein the unit cells may include electrodes electrolytes, and a porous separation membrane which are manufactured according to the present invention.

### [ADVANTAGEOUS EFFECTS]

As described above, the slurry composition according to the present invention is characterized by being excellent in adhesion to a nonpolar substrate, excellent in conductivity, and capable of improving the durability of the redox flow battery.

### [BRIEF DESCRIPTION OF THE DRAWINGS]

FIG. 1 shows a method of measuring the electrical resistance of the electrode manufactured in one example of the present invention.
FIG. 2 shows a method of testing a unit cell of the electrode manufactured in one example of the present invention.
FIG. 3 shows a result of the single cell test of the electrode manufactured in one example of the present invention.

### [DETAILED DESCRIPTION OF THE EMBODIMENTS]

Hereinafter, the preferred Examples are provided for better understanding of the invention. However, these Examples are given for illustrative purposes only and not intended to limit the scope of the present invention thereto.

### Example 1

Tog-LF (BET 800 m²/g, average particle diameter 45-80 um) manufactured by Calgon Corp. as carbon powder 1 (carbon 1), Super-P manufactured by Timcal Ltd. as carbon powder 2 (carbon 2), and a GM5070E (PP-g-MAH) manufactured by Lotte Chemical as a binder were used.

First, 88 g of carbon powder 1, and 8 g of carbon powder 2 were added to the PDM mixer, followed by dry mixing at a speed of 20 RPM in Planetary and 500 RPM in Disperser. Then, 40 g of a binder (10 wt% in toluene) and 50 g of toluene as a solvent were added and subjected to kneading and mixing. 174 g of toluene was then slowly added to the kneaded mixture, and the mixture was stirred to prepare a flowable slurry composition.

### Example 2

A slurry composition was prepared in the same manner as in Example 1, with the exception that 86 g of the carbon powder 1 and 6 g of the binder were used.

### Example 3 to 9

The slurry composition was prepared in the same manner as in Example 1, with the exception that the composition shown in Table 1 below was used.

### Example 10

The slurry composition was prepared in the same manner as in Example 1, with the exception that YP-50F (BET 1600 m²/g, an average particle size of 4-10 um) manufactured by Kuraray Chemical was used as carbon powder 1, and that the composition shown in Table 1 below was used.

### Comparative Example 1

The slurry composition was prepared in the same manner as in Example 1, with the exception that PTFE and SBR were used as the binder, the ratio of PTFE to SBR was 2:1 (w/w), and distilled water was used instead of toluene as a solvent. Specific slurry composition is shown in Table 1 below.

### Comparative Example 2

The slurry composition was prepared in the same manner as in Example 1, with the exception that PTFE and SBR were used as the binder, the ratio of PTFE to SBR was 2:1 (w/w), and distilled water was used instead of toluene as a solvent. Specific slurry composition is shown in Table 1 below.

### Experimental Example

The viscosity of each of the slurry compositions prepared in Examples and Comparative Examples was measured.

The slurry compositions prepared in Examples and Comparative Examples were coated onto PP-Carbon Composite electrode as a substrate, using a doctor blade. The solid coated on the substrate was 5 mg/cm². The tests for adhesion, electrical resistance, and unit cell were performed by using the coated electrode.

### (1) Adhesion test

In the adhesion test, after preparing the above-produced electrode samples (30 x 45 mm²), the coated surface was cut at intervals of 3 × 3 mm² (a total of 150 coated surfaces), and then the scotch tape was attached and detached. The adhesion rate was calculated from the number of the coated surface in which the scotch tape has remained.

### (2) Electrical resistance test

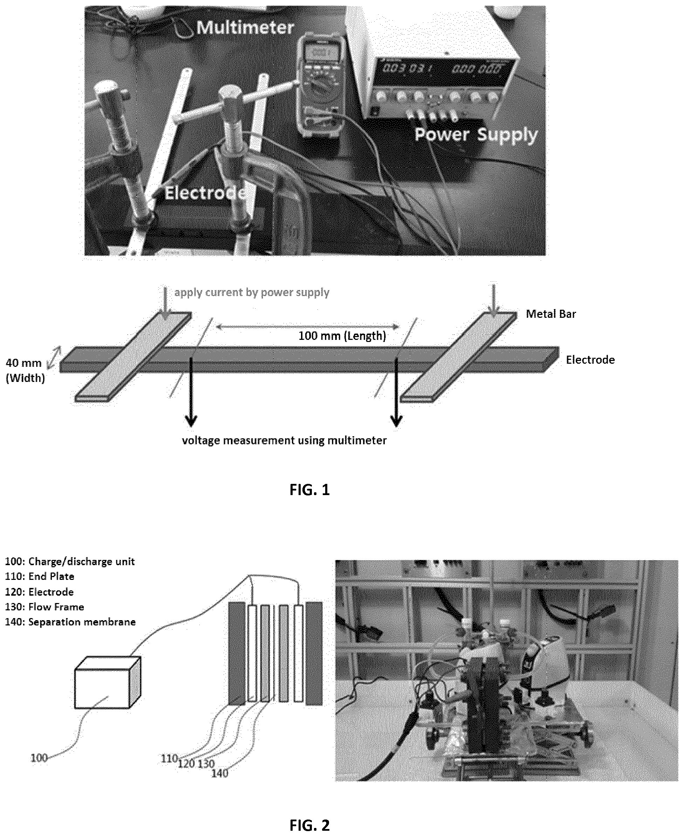

The electrical resistance test was performed as shown in FIG. 1. Specifically, after preparing the above electrode samples (40 x 160 mm²), a metal bar was placed at a distance of 140 mm, and the electrode samples were contacted with the metal bar. After 0.03 A was applied to the metal bar using a multi-meter, the voltage of the electrode and the electrical resistance were measured using the multi-meter at a distance of 100 mm.

### (3) Unit cell test

A unit cell test was performed as shown in FIG. 2. The test was carried out using the unit cell having a reaction area of 7 x 5 cm², and charge/discharge unit 100 provided from Wonatech was used.

The unit cell is composed of a flow flame 130 for forming a flow path for moving the electrolytic solutions based on the separation membrane 140, an electrode 120 for moving electrons, and an end plate 110 for maintaining the shape of the single cell. PP-carbon composite electrode was used as the anode electrode, and the PP-Carbon Composite electrode coated with the slurry composition previously prepared in each of Examples and Comparative Examples was used as a cathode electrode. The electrolytic solution in the container was supplied to the unit cell through a pump, and a current of 700 mA was applied through the charge/discharge unit 100 to perform the charge/discharge. The charge capacity was 2.17 Ah.

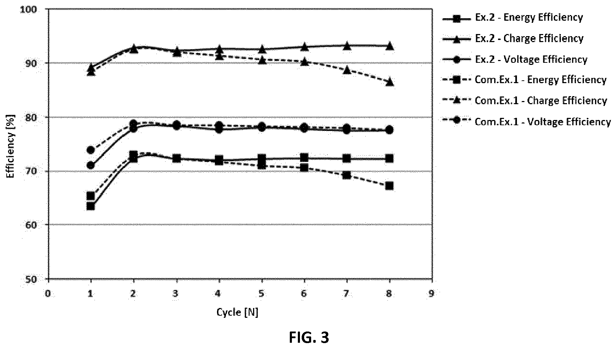

The results of the above tests are shown in the table 1 and FIG. 3 below.

**[Table 1]**

| | carbon 1 (wt. %) | carbon 2 (wt. %) | binder (wt. %) | solid content (wt. %) | viscosity (cps) | adhesion (%) | electrical resistance (Ω·cm) |
|---|---|---|---|---|---|---|---|
| Example 1 | 88 | 8 | 4 | 38.5 | 1600 | 97 | 0.8 |
| Example 2 | 86 | 8 | 6 | 41.2 | 1800 | 99 | 0.8 |
| Example 3 | 84 | 8 | 8 | 42.6 | 2200 | 100 | 1.1 |
| Example 4 | 82 | 8 | 10 | 44.2 | 2800 | 100 | 1.6 |
| Example 5 | 89 | 5 | 6 | 43.5 | 2300 | 99 | 0.9 |
| Example 6 | 82 | 12 | 6 | 38.1 | 1700 | 95 | 0.7 |
| Example 7 | 79 | 15 | 6 | 36.6 | 1500 | 91 | 0.6 |
| Example 8 | 78 | 12 | 10 | 43.5 | 3100 | 100 | 1.4 |
| Example 8 | 75 | 15 | 10 | 45.3 | 3300 | 100 | 1.2 |
| Example 10 | 86 | 8 | 6 | 37.4 | 1900 | 98 | 1.2 |
| Comparative Example 1 | 86 | 8 | 6 | 36.6 | 2200 | 5 | 0.7 |
| Comparative Example 2 | 78 | 12 | 10 | 38.9 | 2800 | 12 | 1.1 |

As shown in Table 1, the slurry composition according to the present invention had no significant difference in electric resistance, but showed excellent adhesion, compared to the compositions from Comparative Examples.

Further, as shown in FIG. 3, the efficiency of charging in Example 2 was constant as the charge/discharge cycle progressed, but it was gradually decreased in Comparative Example 1. Therefore, it was found that Example 2 showed higher durability compared to Comparative Example 1.

## Claims

1. A slurry composition for manufacturing an electrode for a redox flow battery, comprising
a solid comprising activated carbon, a conductive carbon, and a polypropylene-graft-maleic anhydride; and
a hydrophobic solvent.

2. The slurry composition for manufacturing an electrode for a redox flow battery according to claim 1,
wherein the solid is contained in an amount of 36 to 45 parts by weight, and the hydrophobic solvent is contained in an amount of 55 to 64 parts by weight.

3. The slurry composition for manufacturing an electrode for a redox flow battery according to claim 1,
wherein the slurry composition comprises 75 to 90 parts by weight of the activated carbon, 5 to 15 parts by weight of the conductive carbon, and 4 to 10 parts by weight of the polypropylene-grafted maleic anhydride, based on 100 parts by weight of the solid.

4. The slurry composition for manufacturing an electrode for a redox flow battery according to claim 1,
wherein the activated carbon has a specific surface area of 700 to 2,200 m²/g and an average particle diameter of 1 to 80 um.

5. The slurry composition for manufacturing an electrode for a redox flow battery according to claim 1,
wherein the slurry composition has a viscosity of 1500 to 3500 cps.

6. The slurry composition for manufacturing an electrode for a redox flow battery according to claim 1,
wherein the hydrophobic organic solvent comprises at least one selected from the group consisting of toluene, xylene, N-methyl pyrrolidone, dimethyl sulfoxide, and dimethyl acetate.

7. A method for manufacturing an electrode for a redox flow battery, comprising a step of coating the slurry composition of any one of claims 1 to 6 onto a substrate.

8. The method for manufacturing an electrode for a redox flow battery according to claim 7,
wherein the coating thickness of the composition is 5 to 200 um.

9. The method for manufacturing an electrode for a redox flow battery according to claim 7, further comprising a step of drying the coated slurry composition.

10. The method for manufacturing the electrode of the redox flow battery according to claim 7, further comprising a step of deaerating the slurry composition.

11. A redox flow battery comprising an electrode manufactured using the slurry composition of any one of claims 1 to 6.
